# EUROPÄISCHE PATENTSCHRIFT

(11) **EP 0 606 570 B1**
(45) Veröffentlichungstag und Bekanntmachung des Hinweises auf die Patenterteilung: **05.03.1997**
(21) Anmeldenummer: 93119180.3
(22) Anmeldetag: 29.11.1993
(51) Int. Cl.: B29C 33/38, B29C 33/40, B29C 39/10, B29C 69/00

(54) **Verfahren zur Herstellung von Naturstein-Imitationen, insbesondere grossvolumiger Felsblock-Imitationen**
Method for fabricating quarry stone imitations, especially very voluminous boulder imitations
Procédé pour la fabrication d'imitations de pierres naturelles, notamment imitations de blocs de rochers de grand volume

(30) Priorität: 12.12.1992 DE 4241979
(43) Veröffentlichungstag der Anmeldung: 20.07.1994
(73) Patentinhaber: Klüh, Gorden, D-97422 Schweinfurt (DE); Precht, Sven, 97464 Niederwerrn-Oberwerrn (DE)
(72) Erfinder: Klüh, Gorden, D-97422 Schweinfurt (DE); Precht, Sven, 97464 Niederwerrn-Oberwerrn (DE)
(74) Vertreter: Böck, Bernhard

(56) Entgegenhaltungen:
- DE-A- 3 740 682
- DE-B- 1 930 764
- US-A- 4 950 346

## Beschreibung

Die Erfindung bezieht sich auf ein Verfahren zur Herstellung von Naturstein-Imitationen, insbesondere großvolumiger Felsblock-Imitationen, bei dem folgende Schritte angewendet werden:

Anfertigen eines Abdrucks aus einem Kunststoffmaterial von einem Objekt aus Naturstein oder einem Felsblock, Entfernen des Abdrucks von dem Naturstein oder Felsblock und Drehung des Abdrucks in eine Arbeitslage, in welcher der Abdruck als Formwerkzeug verwendbar ist, und Einbringen eines aushärtbaren Trennmittels in das Formwerkzeug nach Patent P 41 37 463.0-16.

Beim Verfahren nach dem Hauptpatent wird die aus Kunststoff bestehende, ggf. glasfaserverstärkte Stein-Rohling-Imitation nach erfolgter Aushärtung des Kunststoffs aus dem Formwerkzeug herausgenommen. Dann wird auf die Oberseite der Stein-Rohling-Imitation ein Kunstharzüberzug aufgetragen und in den noch feuchten Kunstharzüberzug wird feinkörniger Natursand aufgebracht. Der Kunstharzüberzug mit eingelagertem Natursand wird getrocknet und ausgehärtet, die Stein-Imitation ist damit fertig.

Die nach obigem Verfahren hergestellten Naturstein-Imitationen, vorzugsweise großvolumige Felsblock-Imitationen haben sich in der Praxis bewährt, es besteht jedoch das Bedürfnis, das Herstellungsverfahren noch wirtschaftlicher zu gestalten. Dies ist die Aufgabe der vorliegenden Erfindung.

Obige Aufgabe wird gelöst durch ein Verfahren zur Herstellung von Naturstein-Imitationen, insbesondere großvolumiger Felsblock-Imitationen, welches erfindungsgemäß gekennzeichnet ist durch folgende Verfahrensschritte:
a) Nach erfolgter Aushärtung des Trennmittels Beschichten des Formwerkzeugs mit einem dünnen Kunstharzüberzug,
b) in den noch feuchten Kunstharzüberzug Aufbringen und Einlagern von feinkörnigem Natursand,
c) Beschichten des eingelagerten feinkörnigen Natursandes mit einem aushärtbaren Kunststoff zur Ausbildung und Aussteifung der hohlen Naturstein-Imitation und
d) Entfernen der ausgehärteten Naturstein-Imitation aus dem Formwerkzeug.

Der feinkörnige Natursand wird demzufolge in den noch feuchten Kunstharzüberzug im Formwerkzeug aufgebracht und eingelagert und dann wird auf den eingelagerten feinkörnigen Natursand der aushärtbare Kunststoff aufgebracht, um die Naturstein-Imitation fix und fertig im Formwerkzeug zu schaffen. Diese Verfahrensschritte werden also allesamt im Formwerkzeug durchgeführt, was produktionstechnische Vorteile mit sich bringt. Das Herstellungsverfahren wird dadurch wirtschaftlicher.

Ausgestaltungen der Erfindung gehen aus den Unteransprüchen hervor. So wird der dünne Kunstharzüberzug in das Formwerkzeug vorzugsweise eingestrichen.

Zur Erzielung einer höheren Stabilität der Naturstein-Imitation können beim Beschichten des eingelagerten feinkörnigen Natursandes mit dem aushärtbaren Kunststoff Armierungen wie Glasfasermatten eingebracht werden.

Wenn der Abdruck aus Kunststoffmaterial noch nicht die für seine Verwendung als Arbeitsform erforderliche Formstabilität besitzt, kann der Abdruck nach noch einer weiteren Ausgestaltung der Erfindung vor seiner Verwendung als Formwerkzeug durch Beschichtung seiner Rückseite mit einem aushärtbaren Kunststoff und Aushärtung dieses Kunststoffes ausgesteift werden.

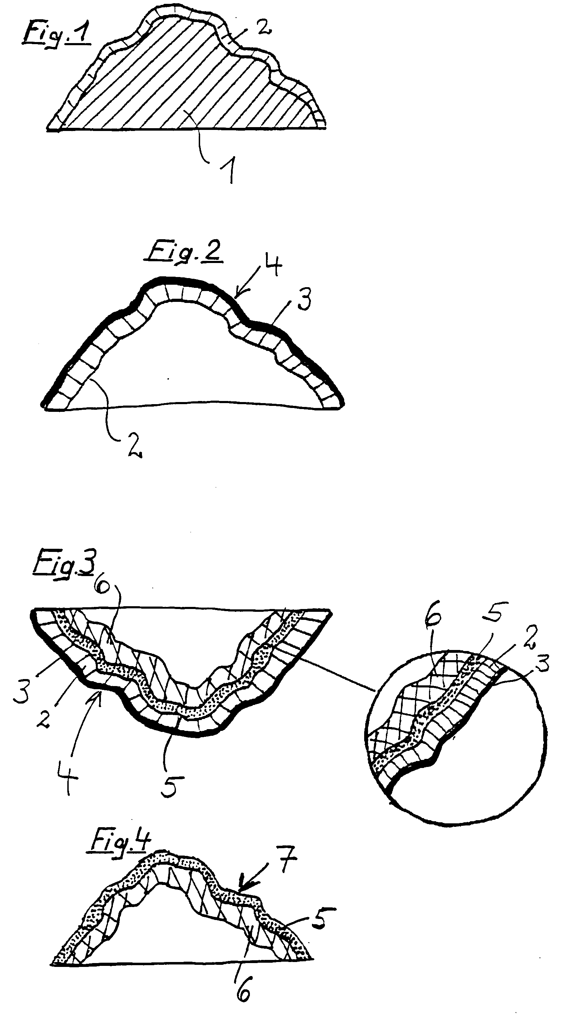

Die Erfindung wird anschließend anhand der Zeichnung eines Ausführungsbeispiels erläutert. Die Figuren 1 - 3 zeigen beispielhaft die Verfahrensschritte bei der Herstellung einer hohlen Felsblock-Imitation von einem Natur-Felsblock.

Nach dem erfindungsgemäßen Verfahren können Naturstein-Imitationen, insbesondere großvolumige Felsblock-Imitationen als naturgetreue Wiedergaben entsprechender Natursteine in unterschiedlichsten Formen und Farben hergestellt werden. Sie können als großvolumige Felsblock-Imitationen beispielsweise zur Landschaftsgestaltung in Gartenanlagen, in zoologischen Gärten usw. und in kleineren Ausführungen auch als Objekteinrichtungen (Innenausstattung) verwendet werden. Um beispielsweise eine Felsblock-Imitation zu schaffen, wird in einem ersten Verfahrensschritt (Fig.1) von einem Natur-Felsblock 1 ein Abdruck 2 (Negativ) aus einem plastischen Kunststoffmaterial, z.B. Silikon-Kautschuk angefertigt. Dieser Abdruck 2 wird nach seiner Entfernung von dem Natur-Felsblock 1 formstabil gemacht bzw. ausgesteift, sofern er nicht von Haus aus formstabil ist, wenn ein anderes Kunststoffmaterial verwendet wird. Zu diesem Zweck wird in einem zweiten Arbeitsschritt (Fig.2) der Abdruck 2 rückseitig z.B. mit glasfaserverstärktem Kunststoff 3 beschichtet. Nach erfolgter Aushärtung dieser rückseitigen Beschichtung 3 ist das Formwerkzeug 4 zur Herstellung der Felsblock-Imitation fertig. Das Formwerkzeug 4 braucht dann nur noch um 180° in seine Arbeitslage (Fig.3) gedreht werden.

In das Formwerkzeug 4 wird dann zunächst ein aushärtbares Trennmittel eingebracht und nach dessen Aushärtung wird das Formwerkzeug 4 innen mit einem dünnen Kunstharzüberzug 5 beschichtet, der vorzugsweise eingestrichen wird. In den noch feuchten Kunstharzüberzug 5 wird anschließend feinkörniger Natursand aufgebracht und eingelagert. Anschließend wird der in den Kunstharzüberzug 5 eingelagerte feinkörnige Natursand mit einem aushärtbaren Kunststoff, der ggf. eine Glasfaserverstärkung enthält, beschichtet. Diese Kunststoffschicht, in der Glasfasermatten eingebettet sein können, ist mit der Bezugszahl 6 gekennzeichnet. Nach der Aushärtung dieser Kunststoffschicht 6 kann man die fertige Naturstein- bzw. Felsblock-Imitation aus dem Formwerkzeug 4 herausnehmen. Die dem Natur-Felsblock 1 entsprechende Felsblock-Imitation 7 ist damit fertig (Fig.4).

Die Aussteifung des Abdrucks 2 zur Schaffung des Formwerkzeugs 4 kann auch durch ein Duroplast, Hart-PVC oder Polyester erfolgen.

Der Abdruck 2 kann auch aus einem plastischen aushärtbaren Kunststoffmaterial mit einer solchen Wanddicke hergestellt werden, daß er die für seine Verwendung als Formwerkzeug erforderliche Formstabilität unmittelbar nach seiner Aushärtung aufweist.

Zur Ausbildung der Schicht 6 kann an Stelle glasfaserverstärkten Kunststoffs auch ein Duroplast, Hart-PVC oder Polyester eingesetzt werden.

## Patentansprüche

1. Verfahren zur Herstellung von Naturstein-Imitationen, insbesondere großvolumiger Felsblock-Imitationen, bei dem folgende Schritte angewendet werden:
Anfertigen eines Abdrucks (2) aus einem Kunststoffmaterial von einem Objekt (1) aus Naturstein oder einem Felsblock, Entfernen des Abdrucks (2) von dem Naturstein oder Felsblock und Drehung des Abdrucks (2) in eine Arbeitslage, in welcher der Abdruck (2) als Formwerkzeug (4) verwendbar ist, und Einbringen eines aushärtbaren Trennmittels in das Formwerkzeug (4), gekennzeichnet durch folgende Verfahrensschritte:
a) Nach erfolgter Aushärtung des Trennmittels Beschichten des Formwerkzeugs mit einem dünnen Kunstharzüberzug (5),
b) in den noch feuchten Kunstharzüberzug (5) Aufbringen und Einlagern von feinkörnigem Natursand,
c) Beschichten des eingelagerten feinkörnigen Natursandes mit einem aushärtbaren Kunststoff (6) zur Ausbildung und Aussteifung der hohlen Naturstein-Imitation und
d) Entfernen der ausgehärteten Naturstein-Imitation aus dem Formwerkzeug (4).

2. Verfahren nach Anspruch 1, dadurch gekennzeichnet, daß der dünne Kunstharzüberzug (5) in das Formwerkzeug (4) eingestrichen wird.

3. Verfahren nach Anspruch 1, dadurch gekennzeichnet, daß beim Beschichten des eingelagerten feinkörnigen Natusandes mit dem aushärtbaren Kunststoff (6) Armierungen wie Glasfasermatten eingebracht werden.

4. Verfahren nach Anspruch 1, dadurch gekennzeichnet, daß der Abdruck (2) vor seiner Verwendung als Formwerkzeug (4) durch Beschichtung seiner Rückseite mit einem aushärtbaren Kunststoff (3) und Aushärtung dieses Kunststoffes (3) ausgesteift wird.

## Claims

1. Method for fabricating quarry stone imitations, especially very voluminous boulder imitations, in which the following stages are employed:
production of an impression (2) made of a plastics material of an object (1) of quarry stone or a boulder, removal of the impression (2) from the quarry stone or boulder and rotation of the impression (2) into a working position in which the impression (2) can be used as a mould (4) and introduction of a curable release agent into the mould (4), characterised by the following stages of the method:
a) on completion of curing of the release agent, coating of the mould with a thin plastic resin covering (5),
b) application and incorporation of fine-grained natural sand into the still moist synthetic resin covering (5),
c) coating of the incorporated fine-grained natural sand with a curable plastics material (6) for forming and stiffening the hollow quarry stone imitation and
d) removal of the cured quarry stone imitation from the mould (4).

2. Method according to claim 1, characterised in that the thin synthetic resin covering (5) is spread into the mould (4).

3. Method according to claim 1, characterised in that reinforcements such as glass fibre mats are introduced during the coating of the incorporated fine-grained natural sand with the curable plastics material (6).

4. Method according to claim 1, characterised in that, before being used as a mould (4), the impression (2) is stiffened by coating its back with a curable plastics material (3) and curing this plastics material (3).

## Revendications

1. Procédé de fabrication d'imitations de pierres naturelles, notamment d'imitations de blocs de rochers de gros volume, suivant lequel on utilise les étapes suivantes :
Fabrication d'une empreinte (2) en matières plastiques d'un objet (1) en pierre naturelle ou d'un bloc de rocher, séparation de l'empreinte (2) de la pierre naturelle ou du bloc de rocher et rotation de l'empreinte (2) dans une position de travail dans laquelle l'empreinte (2) est utilisable comme moule (4), et apport d'un agent de démoulage durcissable dans le moule (4), caractérisé par les étapes suivantes du procédé :
a) Après avoir réalisé le durcissement de l'agent de démoulage, revêtement du moule avec une couche mince de résine synthétique (5),
b) application et inclusion de sable naturel à grains fins dans la couche de résine synthétique (5) encore humide,
c) revêtement du sable naturel à grains fins inclus avec une matière synthétique (6) durcissable pour la formation et le renforcement de l'imitation creuse de pierre naturelle et
d) séparation de l'imitation de pierre naturelle durcie et du moule (4).

2. Procédé selon la revendication 1 , caractérisé en ce que, l'on dépose au pinceau la couche mince de résine synthétique (5) dans le moule (4).

3. Procédé selon la revendication 1 , caractérisé en ce que, l'on utilise des armatures comme des matelas de fibres de verre lors du revêtement du sable naturel à grains fins inclus avec la matière synthétique (6) durcissable.

4. Procédé selon la revendication 1 , caractérisé en ce que, l'empreinte (2) est renforcée avant son utilisation comme moule (4) par revêtement de sa face postérieure avec une matière plastique (3) durcissable et durcissement de cette matière plastique (3).
